# EUROPEAN PATENT SPECIFICATION

(11) **EP 4 610 836 B1**
(45) Date of publication and mention of the grant of the patent: **01.04.2026**
(21) Application number: 24159880.4
(22) Date of filing: 27.02.2024
(51) Int. Cl.: G06F 12/084, G06F 12/0842, G06F 12/0846, G06F 12/121

(54) **METHOD, ENHANCED CONTROLLER, CACHE OR DIRECTORY SYSTEM, AND PROCESSING SYSTEM**
VERFAHREN, ERWEITERTE STEUERUNG, CACHE-SPEICHER ODER VERZEICHNISSYSTEM UND VERARBEITUNGSSYSTEM
PROCÉDÉ, CONTRÔLEUR AMÉLIORÉ, SYSTÈME DE MÉMOIRE CACHE OU DE RÉPERTOIRE ET SYSTÈME DE TRAITEMENT

(43) Date of publication of application: 03.09.2025
(73) Proprietor: ExpectedIT GmbH, 73728 Esslingen am Neckar (DE)
(72) Inventor: STEINMACHER-BUROW, Burkhard, 73728 Esslingen am Neckar (DE); INGIMUNDARSON, Árni, 76137 Karlsruhe (DE)
(74) Representative: Witte, Weller & Partner Patentanwälte mbB

(56) References cited:
- CN-C- 100 451 994
- US-A1- 2015 039 833

## Description

### Background of the invention

The present invention relates to a method for partitioning elements of a data storage resource shared among a plurality of owners. Further, the present invention relates to an enhanced controller for partitioning elements of a data storage resource shared among a plurality of owners. Further, the present invention relates to a cache or directory system. Further, the present invention relates to a processing system.

Processing systems are generally known in the art. A processing system may comprise one or more processors where each processor may comprise one or more cores. Processing systems may further comprise one or more caches. A cache is a special storage resource for copies of data. In particular, a cache may be used by one or more processors to reduce the average cost, i.e. time or energy, when repeatedly accessing data from a main memory. A cache may be a smaller, faster memory, located closer to a processor core, which stores copies of the data from frequently used main memory locations. A cache may be a private cache or a shared cache. A private cache corresponds to one processor or one processor core only. A shared cache is shared by a plurality of processors or a plurality of processor cores. Processing systems may further comprise one or more directories. A directory may be used to manage one or more caches. Processing systems may further comprise a controller for controlling allocation of cache or directory resources, in particular allocation of the cache or directory lines.

When caches or directories are shared among a plurality of processors or processor cores, appropriate management of the cache or directory resources becomes important. In particular, a technique called cache partitioning may be used for managing the cache or directory resources.

For instance, techniques for managing caches or directories are disclosed by document US 2011/0145501 A1 as well as by Zhang, Lunkai et al: "SpongeDirectory: Flexible Sparse Directories Utilizing Multi-Level Memristors", URL: "https://www.researchgate.net/publication/266660649_SpongeDirectory_flexible_sparse_ directories_utilizing_multi-level_memristors", and Shen, John P. et al: "Lecture 21: Multicore Cache Coherence" URL: "https://course.ece.cmu.edu/~ece600/fall16/lectures/lecture21.pdf".

An implementation example of cache partitioning is disclosed by Sanchez, Daniel et al: "Vantage: Scalable and Efficient Fine-Grain Cache Partitioning", URL: "https://web.stanford.edu/group/mast/cgi-bin/drupal/system/files/vantage.pdf', further denoted as Vantage paper.

According to the Vantage paper, a cache partitioning solution consists of an allocation policy to determine the space allocated per partition, in particular to improve fairness, favor threads based on priorities, or maximize overall throughput, and a partitioning scheme to actually enforce those allocations.

According to a first partitioning scheme, the resource is partitioned by assigning a subset A of elements to owner A, a subset B to owner B, etc. where the subsets do not overlap. Only owner A can use subset A, etc. Examples of this partitioning scheme include the "way-partitioning" and "partition by sets" described in the Vantage paper. In particular, the Vantage paper mentions their downsides for the implementation and performance of a cache or directory.

According to a second partitioning scheme, it is assumed that each object has a single owner, and the resource is partitioned by assigning each owner a maximum threshold number of elements to be used. Thus, any given element is suitable for an object from any owner, and this helps the implementation and performance of a cache or directory. The Vantage paper particularly describes examples of this second partitioning scheme.

US 2015/039833 A1 discloses cache memory arrays comprising partitions that in turn comprise subdivisions. The partitions are cache banks and the subdivisions are bank entries. A property or attribute of cached data may include process or processor owner identifiers (ID's). A cache block owner encoding indicates the source which owns the corresponding cache block.

The known techniques for partitioning of data storage resources, such as caches or directories, still leave room for improvements, in particular with respect to flexibility and efficiency.

### Summary of the invention

Against this background, it is an object of the present invention to provide an improved method for partitioning elements of a data storage resource and an improved enhanced controller for partitioning elements of a data storage resource. In particular, it is an object of the present invention to improve partitioning of elements of a data storage resource, in particular in such a way that the data storage resource can be the flexibly and efficiently shared. Further, it is an object of the present invention to provide an improved cache or directory system. Further, it is an object of the present invention to provide an improved processing system.

According to a first aspect of the invention, there is provided a method for partitioning elements of a data storage resource shared among a plurality of owners, wherein each element is configured to store an object, wherein each object is owned by one or more owners of the plurality of owners, wherein the method comprises:
- a determination step of determining, for each owner, a total value representing the owner's share of the resource, on a basis of the ownerships of each owner among the objects; and
- a partition step of partitioning the elements of the data storage resource based on the determined total values of the owners.

According to a second aspect of the invention, there is provided an enhanced controller for partitioning elements of a data storage resource shared among a plurality of owners, wherein each element is configured to store an object, wherein each object is owned by one or more owners of the plurality of owners, wherein the enhanced controller comprises:
- a determination unit that is configured to determine, for each owner, a total value representing the owner's share of the resource, on a basis of the ownerships of each owner among the objects; and
- a partition unit that is configured to partition the elements of the data storage resource based on the determined total values of the owners.

The method of the first aspect may be a computer-implemented method. Preferably, the method of the first aspect may be performed by the enhanced controller of the second aspect. In particular, the determination step may be performed by the determination unit of the enhanced controller, and the partition step may be performed by the partition unit of the enhanced controller.

The method and the enhanced controller partition the elements of the data storage resource shared among the plurality of owners. The data storage resource may be a physical entity that is configured to store data. For instance, the data storage resource may one of a memory, a cache and a directory. The data storage resource comprises a plurality of elements. For instance, each element may be one of a memory line, a cache line, and a directory line. Each element is configured to store an object. In particular, each element may store an object or may not store an object, i.e. be empty. For instance, each object may be an entry stored in the respective element. Preferably, the number of elements of data storage resource may be 1,000 or more.

The data storage resource is shared among a plurality of owners. Each owner may be a processing entity, such as a processor or a core of a processor. A core of a processor may be denoted as processor core. Each object is owned by one or more owners of the plurality of owners. Thus, each object is either owned by a single owner or is shared among a subset of the plurality of owners. An owner of an object has an ownership of the object.

For each owner, a total value representing the owner's share of the resource is determined, on a basis of the ownerships of each owner among the objects. In particular, the determination unit can determine the total value of each owner. By this, it is determined how the elements of the data storage resource are shared among the owners.

The elements of the data storage resource are partitioned based on the determined total values of the owners. In particular, the partition unit can partition the elements of the data storage resource. By this, the partitioning is efficiently performed by taking into account how the elements of the data storage resource are shared among the owners.

As initially explained, the partitioning schemes known in the art assume and support only a single owner per object. In contrast, the partitioning scheme provided by the new method and the new enhanced controller as defined by the first and second aspect assumes and supports objects owned by one or more owners. In particular, the new method and the new enhanced controller allow that objects stored in elements of a data storage resource can be owned by more than one owner. By this, the partitioning of the elements of the data storage resource among a plurality of owners is more flexible. Further, by using the total values representing the owners' shares of the resource, the partitioning of the elements of the data storage resource among the plurality of owners is efficiently controlled.

According to a third aspect of the invention, there is provided a cache or directory system comprising the enhanced controller of the second aspect and the data storage resource.

According to a fourth aspect of the invention, there is provided a processing system comprising:
- one or more cache or directory systems according to the third aspect; and
- a plurality of processors or a plurality of cores of one or more processors as the plurality of owners.

By the processing system of the fourth aspect, the processors or processor cores can share a data storage resource controlled by the enhanced controller. In particular, the processing system may comprise a plurality of cache or directory systems. By this, the processors or processor cores may share a plurality of data storage resources, each controlled by a respective enhanced controller.

According to the first to fourth aspect, the partitioning of the elements of the data storage resource among a plurality of owners can be performed in an efficient and flexible manner.

Accordingly, the objective technical problem is fully solved.

In a preferred refinement of any one of the above aspects, the plurality of owners may be a plurality of processors or a plurality of cores of one or more processors.

Thus, the owners are processing entities. By this, the partitioning of the elements of the data storage resource among a plurality of processors or processor cores can be efficiently controlled. Preferably, the number of processors or processors cores may be 10 or more.

In a further refinement of any one of the above aspects, the data storage resource may be a cache or directory, in particular wherein each object corresponds to a cache or directory line entry and associates the line with the one or more owners which are currently caching the line.

Thus, the data storage resource is a cache or directory. Each element of the data storage resource is a cache line or directory line. Each object corresponds to a cache line entry or directory line entry. Thereby, each cache line entry or directory line entry is associated with the one or more owners which own the respective object. In particular, the cache or directory may be shared among a plurality of processors or cores. By this, the partitioning of a cache or directory among a plurality of owners can be efficiently controlled.

In a further refinement of any one of the above aspects, the partition step may comprise:
- selecting at least one of the objects, in particular based on the determined total values of the owners; and
- removing the at least one selected object from the resource.

Preferably, an eviction unit of the partition unit may be configured to select the at least one object and remove the at least one object from the resource. Alternatively, an operation unit of the processing system may be configured to select the at least one object and remove the at least one object from the resource. The at least one object is preferably selected based on the determined total values of the owners. By this, eviction of objects from the resource can be controlled taking into account how the elements of the data storage resource are shared among the owners. For example, objects of owners could be selected based on which owners have an excessive share of the data storage resource.

In a further refinement of any one of the above aspects, the at least one of the objects may be selected and removed from the resource in case that most or all of the elements of the resource store an object and/or in case that at least one new object is to be added to the resource.

By this, eviction of objects from the resource is performed, when necessary, in particular when there is a necessity of emptying elements of the data storage resource.

In a further refinement of any one of the above aspects, the partition step may comprise:
- identifying, for each owner, whether the owner has an excessive ownership of the resource, by comparing the total value of the owner to a preconfigured threshold, and
- identifying, for each owner with excessive ownership, one or more objects owned by the owner as candidates for removal, in particular for eviction, from the resource.

Preferably, an excessive-owner identification unit of the partition unit identifies, for each owner, whether the owner has an excessive ownership of the resource. Preferably, a candidate identification unit of the partition unit identifies, for each owner with excessive ownership, one or more objects owned by the owner as candidates for removal, in particular for eviction, from the resource. By this, removal, in particular, eviction, of objects from the resource can be efficiently controlled taking into account how the elements of the data storage resource are shared among the owners. In particular, only objects are made candidates for removal that belong to owners having excessive ownership. The preconfigured threshold may also be denoted as target size. Accordingly, the determined total value of an owner may also be denoted as calculated size. The preconfigured threshold may be the same for all owners. Alternatively, there may be a separate preconfigured threshold for each owner. The preconfigured threshold may be static or dynamic. Thus, the preconfigured threshold may be set in advance and/or be adjustable during operation. An owner has excessive ownership when the total value is above the preconfigured threshold. Objects that are solely and/or partially owned by an excessive owner may be determined as the candidates for removal from the resource. An object is solely owned by an owner, when the object is owned by one owner only. An object is partially owned by an owner, when the object is owned by more than one owner.

In a further refinement of any one of the above aspects, the at least one of the objects may be selected by selecting at least one object among the candidates.

In particular, in the partition step, the at least one object is selected among the candidates, and then removed from the resource. In this way, removal, in particular eviction, of objects from the resource can be efficiently controlled.

In a further refinement of any one of the above aspects, each owner may have a fractional ownership of each owned object, wherein the total value of an owner of the plurality of owners is a sum of the fractional ownerships of the respective owner among the plurality of objects.

The fractional ownership may be calculated by one divided by the number of owners that own the object. Alternatively, the fractional ownership may also be calculated differently, e.g. by performing weighting of the objects. Preferably, for each owner, the total value may be determined by summing up the fractional ownerships of the respective owner among the plurality of objects. Alternatively, in response to addition of an object, removal of an object, or ownership change of an object, the total values of owners which are affected by the addition, removal or ownership change may also be updated, in particular by adding or subtracting their fractional ownerships respectively.

In a further refinement of any one of the above aspects, for each object, a pseudo-owner may be determined from the one or more owners of the respective object, wherein the pseudo-owner has a pseudo-ownership of the respective object, wherein the total value of each owner is a sum of the pseudo-ownerships of the respective owner among the plurality of objects.

Preferably, the determination unit may determine, for each object, the pseudo-owner from the one or more owners of the respective object, and the determination unit may determine the total value of each owner as a sum of the pseudo-ownerships of the respective owner among the plurality of objects. Thus, each object has one pseudo-owner which is selected from the one or more owners of the respective object. This means that the pseudo-owner is one of the one or more owners of the object. The pseudo-owner has a pseudo-ownership of the respective object. By summing up the pseudo-ownership of an owner among the plurality of objects, the total value may be determined. Alternatively, the total value of each owner may also be determined by a weighted sum of the pseudo-ownerships of the respective owner among the plurality of objects, in particular when some objects may have more weight than others.

The usage of pseudo-owners for determining the total values has some advantages over the usage of fractional ownerships as described beforehand. Using fractional ownerships for determination of the total values is costly, complex and can result in not negligible rounding errors, especially when objects are owned by a larger number of owners, for example 10 owners or more. In particular, when changes of the objects occur, i.e. addition, removal or ownership change, and the total values are updated, the total values of many owners must be updated and rounding errors are likely to occur due to the fractional ownerships.

In contrast, by usage of pseudo-owners for determining the total values, the calculation of the total values can be facilitated a lot because each object has only one pseudo-owner. Further, rounding errors caused by fractions can be avoided because addition or subtraction of fractions is avoided when using pseudo-ownerships instead of fractional ownerships. By this, the total values can be calculated efficiently and accurately.

In a further refinement of any one of the above aspects, for each owner, the total value may be determined by summing up the pseudo-ownerships of the respective owner among the plurality of objects.

Preferably, an accounting unit of the determination unit may determine the total value of each owner by summing up the pseudo-ownerships of the respective owner among the plurality of objects. By this, the total value can be easily determined.

In a further refinement of any one of the above aspects, the pseudo-owner of an object may be determined based on the one or more owners that own the object.

Preferably, a pseudo-owner calculation unit of the determination unit may determine the pseudo-owner of an object based on the one or more owners that own the object. For instance, the pseudo-owner of an object may be determined by randomly or pseudo-randomly selecting one of the one or more owners that own the object. Alternatively, the pseudo-owner may be determined deterministically by using at least information on the one or more owners that own the object. As a simple example, a pseudo-owner may be predefined for each subset of the plurality of owners. For example, a corresponding mapping, preferably as a function or table, from subsets of the plurality of owners to pseudo-owners may be predefined. In this case, the pseudo-owner of an object can be determined on the basis of the one or more owners of the object and the predefined mapping from subsets to pseudo-owners.

In a further refinement of any one of the above aspects, the pseudo-owner of an object may be determined further based on an information associated with the respective object, in particular wherein the information is the memory address associated with each cache or directory line entry.

Thus, the pseudo-owner of an object may be determined based on the information associated with the respective object and on the one or more owners that own the object. In particular, the pseudo-owner of an object may be determined based on the information associated with the respective object and on a specific sequence of the one or more owners the one or more owners that own the object. By this, the pseudo-owner can still be determined deterministically, but with an improved stochastic distribution. Therefore, the determination of the total values is further improved. This means that even for the same subset of owners, the pseudo-owner still varies depending on the information associated with the respective object. The information associated with the object may be an identifier of the object or an identifier of the element that stores the object. In particular, the information associated with the object may be a unique memory address associated of the cache line entry or directory line entry.

In a further refinement of any one of the above aspects, the plurality of owners may be ordered in a defined sequence, wherein the pseudo-owner of an object may be determined by:
- determining a specific sequence of the one or more owners of the object based on the defined sequence;
- calculating a hash-ID by applying a hash function to the information associated with the object and/or to the specific sequence;
- calculating a hash-position by taking the hash-ID modulo the number of owners of the object, in particular wherein the hash-position indicates a position in the specific sequence of the one or more owners of the object; and
- determining the pseudo-owner of the object based on the hash-position and the specific sequence of the one or more owners of the object, in particular wherein the owner at the position in the specific sequence indicated by the hash-position is determined as the pseudo-owner of the object.

Preferably, a pseudo-owner calculation unit of the determination unit may determine the pseudo-owner in this way. The defined sequence orders the plurality of owners. Preferably, the defined sequence may be a bit-vector space, wherein each bit corresponding to one of the plurality of owners. The value of each bit can be "0" or "1", where "0" indicates that the respective owner is not an owner of the object and "1" indicates that the respective owner is an owner of the object. The specific sequence orders the one or more owners of the object. The specific sequence is determined based on the defined sequence. The specific sequence may be a bit-vector of the bit-vector space. In the bit-vector, the value of each bit corresponding to an owner that is not one of the one or more owners is set to "0", and the value of each bit corresponding to an owner that is one of the one or more owners is set to "1". Further, a hash-ID is calculated by applying a hash function to the information associated with the object and/or to the specific sequence. In general, a hash function may be any function that can be used to map data of arbitrary size to fixed-size values, though there are some hash functions that support variable length output. The values returned by a hash function are called hash values, hash codes, digests, or simply hashes. The values are usually used to index a fixed-size table called a hash table. Use of a hash function to index a hash table is called hashing or scatter storage addressing. In the present case, the hash function may be a function that maps the information associated with the object and/or the specific sequence to a hash-ID. The hash-ID may be a number greater than or equal to zero. Further, the hash-position is calculated based on the hash-ID and the number of the one or more owners of the object. For an object with n owners, the bit-vector has n bits set to 1. Preferably, the hash-position may be calculated based on taking the hash-ID modulo the number of one or more owners of the object. The hash-position plus one may indicate a position in the specific sequence. Preferably, the hash-position may be a number k that may indicate the k-th bit in the bit-vector having the value "1". With other words, the number k may indicate the k-th bit among all bits in the bit-vector that have the value "1". The pseudo-owner of the object is determined based on the hash-position and the specific sequence of the one or more owners of the object. Preferably, the owner at the position in the specific sequence indicated by the hash-position may be determined as the pseudo-owner of the object. In particular, the owner corresponding to the k-th bit in the bit-vector having the value "1" is determined as the pseudo-owner of the object. By this, the pseudo-owner can still be determined deterministically, but with an improved stochastic distribution. Therefore, the determination of the total values is further improved.

In a further refinement of any one of the above aspects, when a new object is added to the resource, a pseudo-owner may be determined for the new object, and the total value of the owner who is the pseudo-owner of the new object is increased by one.

Preferably, a pseudo-owner calculation unit of the determination unit may determine the pseudo-owner of the new object and an accounting unit of the determination unit may increase the total value of the owner by one. By this, the total values can be easily updated when a new object is added to the resource. The addition operation may be a requested addition. Preferably, the new object may be added to the resource by an operation unit of the processing system.

In a further refinement of any one of the above aspects, when an object is removed from the resource, the total value of the owner who was the pseudo-owner of the removed object may be reduced by one.

Preferably, an accounting unit of the determination unit may reduce the total value of the owner who was the pseudo-owner of the removed object by one. By this, the total values can be easily updated when an old object is removed from the resource. The removal operation may be a requested removal or an eviction. Preferably, the object may be removed from the resource by an operation unit of the processing system. Alternatively, the object may be removed from the resource by an eviction unit of the partition unit.

In a further refinement of any one of the above aspects, when the ownership of an object in the resource is changed, the total value of the owner who was the pseudo-owner of the object before the ownership of the object changed may be reduced by one, a new pseudo-owner may be determined for the object, and the total value of the owner who is the new pseudo-owner of the object may be increased by one.

Preferably, an accounting unit of the determination unit may reduce the total value of the owner who was the old pseudo-owner by one, a pseudo-owner calculation unit of the determination unit may determine the new pseudo-owner of the object and the accounting unit may increase the total value of the owner who is the new pseudo-owner by one. By this, the total values can be easily updated when the ownership of an object in the resource changes. Preferably, the ownership of an object in the resource is changed by an operation unit of the processing system.

In a further refinement of any one of the above aspects, the determination unit may comprise an accounting unit that is configured to determine the total value of each owner.

Preferably, the accounting unit may be configured to determine the total value of each owner as a sum of the pseudo-ownerships of the respective owner among the plurality of objects. In particular, the accounting unit may be configured to update the total values of the owners when a new object is added to the resource and/or when an object is removed from the resource and/or when the ownership of an object in the resource changes. By this, as already described above, the total value can be easily determined.

In a further refinement of any one of the above aspects, the determination unit may comprise a pseudo-owner calculation unit that is configured to determine, for an object, a pseudo-owner from the one or more owners of the respective object.

By this, as already described above, the pseudo-owner can still be determined deterministically, but with an improved stochastic distribution. Therefore, the determination of the total values is further improved.

In a further refinement of any one of the above aspects, the partition unit may comprise an excessive-owner identification unit that is configured to identify, for each owner, whether the owner has an excessive ownership of the resource, by comparing the total value of the owner to a preconfigured threshold.

By this, as already described above, it is possible to determine how the elements of the data storage resource are shared among the owners, in particular whether one or more of the owners have excessive ownership of the resource.

In a further refinement of any one of the above aspects, the partition unit may comprise a candidate identification unit that is configured to identify, for each owner with excessive ownership, one or more objects owned by the owner as candidates for removal, in particular for eviction, from the resource.

By this, as already described above, removal, in particular, eviction of objects from the resource can be efficiently controlled taking into account how the elements of the data storage resource are shared among the owners. In particular, only objects are made candidates for removal that belong to owners having excessive ownership.

In a further refinement of any one of the above aspects, the partition unit may comprise an eviction unit that is configured to select at least one of the objects, in particular based on the determined total values of the owners, and to remove the at least one selected object from the resource.

By this, as already described above, eviction of objects from the resource can be effectively controlled taking into account how the elements of the data storage resource are shared among the owners. Preferably, the eviction unit may select the at least one object among the candidates that are identified by the candidate identification unit. Preferably, the eviction unit may select and remove the at least one of the objects from the resource in case that most or all of the elements of the resource store an object and/or in case that at least one new object is to be added to the resource.

In a further refinement of any one of the above aspects, the enhanced controller may further comprise an operation unit that is configured to perform at least one operation of adding an object to the resource, removing an object from the resource, and changing the ownership of an object in the resource.

The operation unit may also be denoted as an unenhanced control unit or an addition-ownership change-removal (AOR) unit. The operation unit can add objects to the resource and/or remove objects from the resource and/or change the ownership of an object in the resource. Preferably, the operation unit may perform the operations on request. This means that the operation unit may be configured to receive a request for performing at least one the operations. In this case, the operations of addition, removal, and ownership change are requested operations, i.e. a requested addition, a requested removal, and a requested ownership change. The request may be received from an external unit, for example from one of the processors or processor cores, or from another external control device.

In a further refinement of any one of the above aspects, the operation unit may be configured to select at least one of the objects, in particular based on the determined total values of the owners, and to remove the at least one selected object from the resource.

By this, as already described above, eviction of objects from the resource can be effectively controlled taking into account how the elements of the data storage resource are shared among the owners. Preferably, the operation unit may select the at least one object among the candidates that are identified by the candidate identification unit. Preferably, the operation unit may select and remove the at least one of the objects from the resource in case that most or all of the elements of the resource store an object and/or in case that at least one new object is to be added to the resource.

It goes without saying that the features mentioned above and those yet to be explained below cannot only be used in the respective combinations disclosed, but also in different combinations or alone without departing from the scope of the present invention.

### Brief description of the drawings

Further features and advantages will be apparent from the following detailed description. Unless otherwise defined, all technical and scientific terms have the meaning as commonly understood by one of ordinary skill in the art. In the drawings:
- Fig. 1: shows a simplified schematic illustration of an exemplary embodiment of an enhanced controller for partitioning elements of a data storage resource;
- Fig. 2: shows a simplified schematic illustration of an exemplary embodiment of a cache or directory system;
- Fig. 3: shows a simplified schematic illustration of an exemplary embodiment of a processing system;
- Fig. 4: shows a flow diagram of an exemplary embodiment of a method for partitioning elements of a data storage resource;
- Fig. 5: shows a flow diagram of an example of a process for determining a pseudo-owner;
- Fig. 6: shows a flow diagram of a first example of a process for determining total values of owners;
- Fig. 7: shows a flow diagram of a second example of a process for determining total values of owners;
- Fig. 8: shows a flow diagram of a third example of a process for determining total values of owners;
- Fig. 9: shows a flow diagram of a fourth example of a process for determining total values of owners; and
- Fig.: 10 shows a flow diagram of an example of a process for partitioning elements of a data storage resource based on total values of owners.

### Detailed description of the drawings

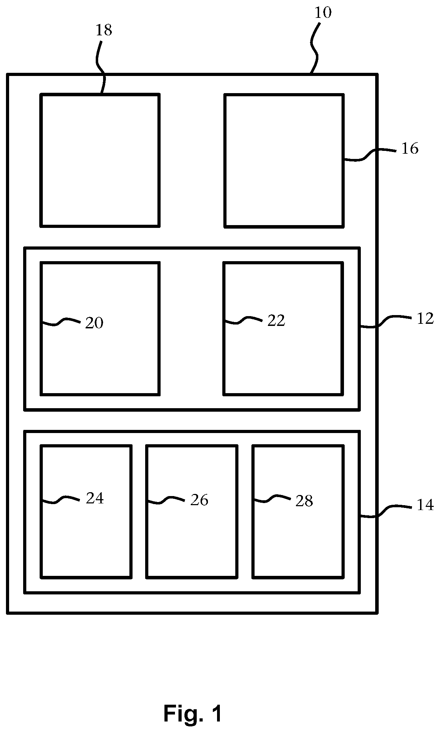

In Fig. 1, an exemplary embodiment of the new enhanced controller for partitioning elements of a data storage resource is shown designated by reference number 10 in its entirety. Each element is configured to store an object. Each object is owned by one or more owners of the plurality of owners. The plurality of owners may be a plurality of processors or a plurality of cores of one or more processors. The data storage resource may be a cache or directory. Each element of the data storage resource may be a cache line or directory line and each object may correspond to a cache line entry or directory line entry.

The enhanced controller 10 comprises a determination unit 12 and a partition unit 14. The determination unit 12 is configured to determine, for each owner, a total value representing the owner's share of the resource, on a basis of the ownerships of each owner among the objects. The partition unit 14 is configured to partition the elements of the data storage resource based on the determined total values of the owners.

The enhanced controller 10 may further comprise an operation unit 16. The operation unit 16 may be configured to perform at least one operation of adding an object to the resource, removing an object from the resource, and changing the ownership of an object in the resource. The enhanced controller 10 may further comprise a reception unit 18. The reception unit 18 may be configured to obtain an action that is to be performed with respect to the objects. The reception unit 18 may receive a request for performing at least one operation of adding an object to the resource, removing an object from the resource, and changing the ownership of an object in the resource. The request may be received from an external unit, for example from the one of the processors or processor cores, or from another external control device.

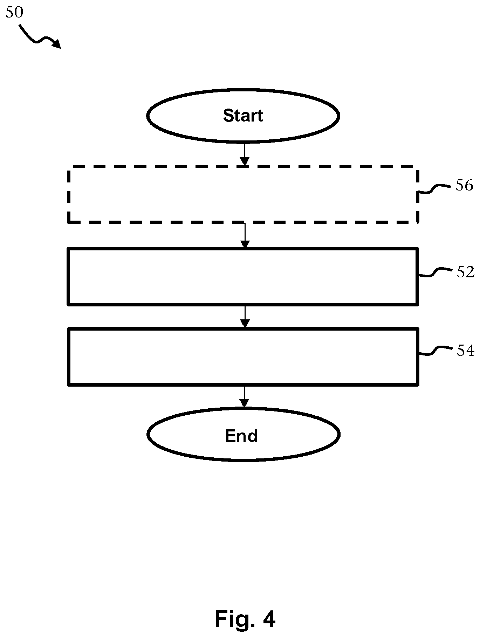

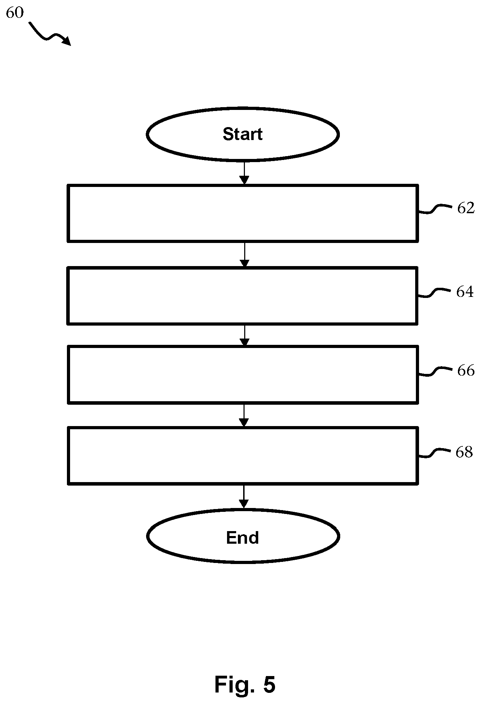

The determination unit 12 may comprise a pseudo-owner calculation unit 20. The pseudo-owner calculation unit 20 is configured to determine, for an object, a pseudo-owner from the one or more owners of the respective object. The determination of a pseudo-owner of an object will be described below with respect to the Figs. 4 and 5 in more detail.

The determination unit 12 may comprise an accounting unit 22. The accounting unit 22 is configured to determine the total value of each owner. Preferably, the accounting unit 22 may be configured to determine the total value of each owner as a sum of the pseudo-ownerships of the respective owner among the plurality of objects. In particular, the accounting unit 22 may be configured to update the total value when a new object is added to the resource and/or when an object is removed from the resource and/or when the ownership of an object in the resource changes. The determination of the total values will be described below with respect to the Figs. 4 to 9 in more detail.

The partition unit 14 may comprise an excessive-owner identification unit 24 that is configured to identify, for each owner, whether the owner has an excessive ownership of the resource, by comparing the total value of the owner to a preconfigured threshold. The partition unit 14 may comprise a candidate identification unit 26 that is configured to identify, for each owner with excessive ownership, one or more objects owned by the owner as candidates for removal, in particular for eviction, from the resource.

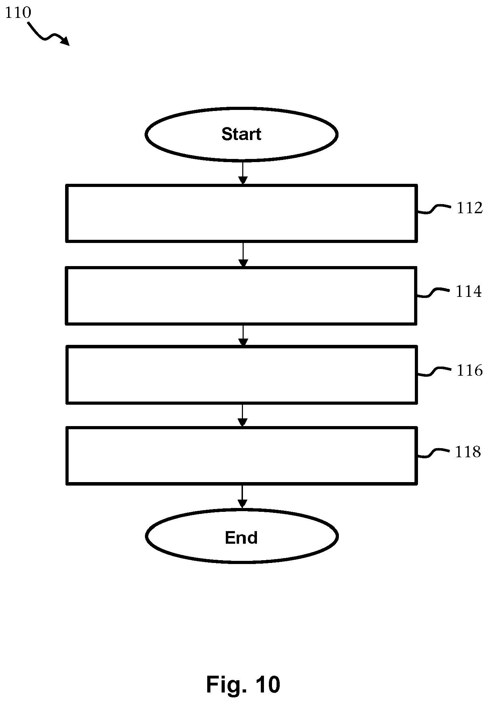

The partition unit 14 may comprise an eviction unit 28 that is configured to select at least one of the objects, in particular based on the determined total values of the owners, and to remove the at least one selected object from the resource. Alternatively, the operation unit 16 may further be configured to select at least one of the objects, in particular based on the determined total values of the owners, and to remove the at least one selected object from the resource. Preferably, the eviction unit 28 or the operation unit 16 may select the at least one object among the candidates that are identified by the candidate identification unit. Preferably, the eviction unit 28 or the operation unit 16 may select and remove the at least one of the objects from the resource in case that most or all of the elements of the resource store an object and/or in case that at least one new object is to be added to the resource. The partitioning of the elements of the data storage resource will be described below with respect to the Figs. 4 and 10 in more detail.

The enhanced controller 10 may be a logic circuit, such as a field programmable gate array (FPGA), an application-specific integrated circuit (ASIC), a microcontroller, or any other suitably programmable electrical circuit. In particular, the units of the enhanced controller 10 may be implemented by the logic circuit.

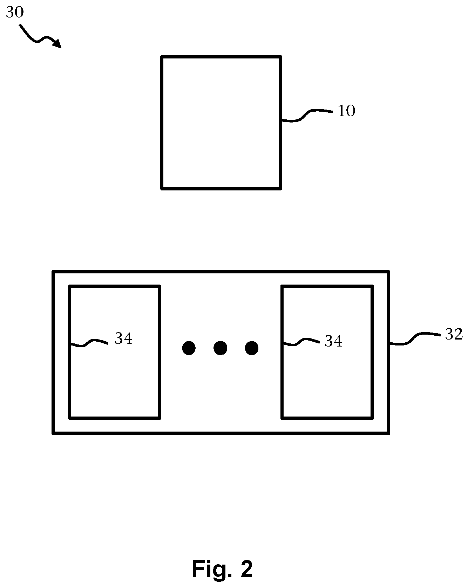

In Fig. 2, an exemplary embodiment of the new cache or directory system is shown designated by reference number 30 in its entirety. The cache or directory system 30 comprises the enhanced controller 10 of Fig. 1 and a data storage resource 32. The data storage resource 32 comprises a plurality of elements 34. Each element is configured to store an object. Each object is owned by one or more owners of a plurality of owners. The enhanced controller 10 is configured to partition the elements 34 of the data storage resource 32 shared among the plurality of owners.

The data storage resource 32 may be a cache or directory. Each element 34 of the data storage resource 32 may be a cache line or directory line and each object may correspond to a cache line entry or directory line entry.

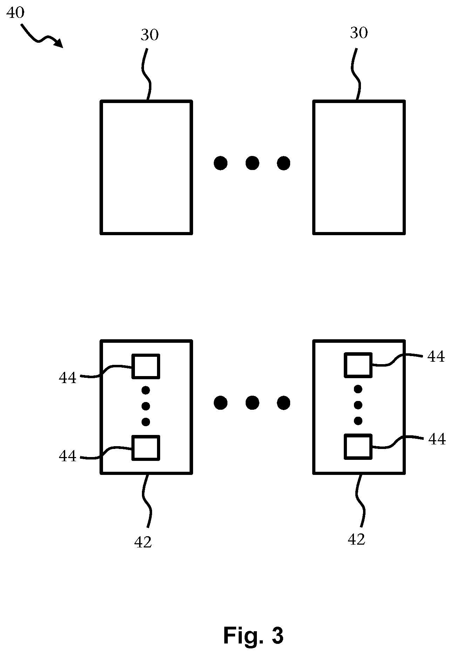

In Fig. 3, an exemplary embodiment of the new processing system is shown designated by reference number 40 in its entirety. The processing system 40 comprises one or more cache or directory systems 30, and one or more processors 42, wherein each processor may comprise one or more cores 44. Each cache or directory system may be configured according to the cache or directory system 30 of Fig. 2. The processors 42 or the cores 44 may be the plurality of owners in each of the cache or directory systems 30.

In Fig. 4, an exemplary embodiment of the new method for partitioning elements of a data storage resource is shown designated by reference number 50 in its entirety. Each element is configured to store an object. Each object is owned by one or more owners of the plurality of owners. The method 50 may be performed by the enhanced controller 10 of Fig. 1 and/or by the cache or directory system 30 of Fig. 2 and/or by the processing system 40 of Fig. 3.

In a first step 52 of the method 50, for each owner, a total value is determined representing the owner's share of the data storage resource 32, on a basis of the ownerships of each owner among the objects. The step 52 is also called determination step. The determination step 52 may be performed by the determination unit 12. In particular, the determined total values of the owners may be stored in a storage table.

In a further step 54 of the method 50, the elements 34 of the data storage resource 32 are partitioned based on the determined total values of the owners. The step 54 is also called partition step. The partition step 54 may be performed by the partition unit 14. In particular, the determined total values may be obtained from the storage table for usage in the partition step 54.

In an optional step 56 of the method 50, at least one operation of adding an object to the resource, removing an object from the resource, and changing the ownership of an object in the resource is performed. The determination step 56 may be performed by the operation unit 16. Preferably, the step 56 may be performed before step 52.

In step 52, the total value of each owner may be a sum of pseudo-ownerships of the respective owner among the plurality of objects, wherein, for each object, a pseudo-owner is determined from the one or more owners of the respective object, wherein the pseudo-owner has a pseudo-ownership of the respective object. Preferably, the determination unit 12 may determine, for each object, the pseudo-owner from the one or more owners of the respective object, and the determination unit 12 may determine the total value of each owner as a sum of the pseudo-ownerships of the respective owner among the plurality of objects.

The pseudo-owner of an object may be determined based on the one or more owners that own the object. Preferably, the pseudo-owner of an object may be determined based on information associated with the respective object and on the one or more owners that own the object. In particular, the pseudo-owner of an object may be determined based on the information associated with the respective object and on a specific sequence of the one or more owners the one or more owners that own the object. Preferably, the pseudo-owner calculation unit 20 may determine the pseudo-owner in this way. The information associated with the object may be an identifier of the object or an identifier of the element that stores the object. In particular, the information associated with the object may be a unique memory address associated of the respective cache line entry or directory line entry.

In Fig. 5, a process 60 is shown for determining a pseudo-owner. Preferably, in the determination step 52, the pseudo-owner is determined for each object by using the process 60. Preferably, the pseudo-owner calculation unit 20 is configured to determine the pseudo-owner of each object by using the process 60.

In a first step 62 of the process 60, a specific sequence of the one or more owners of the object is determined based on a defined sequence, wherein the plurality of owners is ordered in the defined sequence. Preferably, the defined sequence may be a bit-vector space, wherein each bit corresponding to one of the plurality of owners. The value of each bit can be "0" or "1", where "0" indicates that the respective owner is not an owner of the object and "1" indicates that the respective owner is an owner of the object. The specific sequence may be a bit-vector of the bit-vector space. In the bit-vector, the value of each bit corresponding to an owner that is not one of the one or more owners is set to "0", and the value of each bit corresponding to an owner that is one of the one or more owners is set to "1".

In a further step 64 of the process 60, a hash-ID is calculated by applying a hash function to the information associated with the object and/or to the specific sequence. In particular, the information associated with the object may be a unique memory address associated of the respective cache line entry or directory line entry. Preferably, the hash function may be a function that maps the information associated with the object and/or the specific sequence to a hash-ID. The hash-ID may be a number greater than or equal to zero.

In a further step 66 of the process 60, a hash-position is calculated by taking the hash-ID modulo the number of owners of the object. Preferably, the hash-position may indicate a position in the specific sequence of the one or more owners of the object. Preferably, the hash-position plus one may be a number k that indicates the k-th bit in the bit-vector having the value "1".

In a further step 68 of the process 60, the pseudo-owner of the object is determined based on the hash-position and the specific sequence of the one or more owners of the object. Preferably, the owner at the position in the specific sequence indicated by the hash-position is determined as the pseudo-owner of the object. Preferably, the owner corresponding to the k-th bit in the bit-vector having the value "1" is determined as the pseudo-owner of the object.

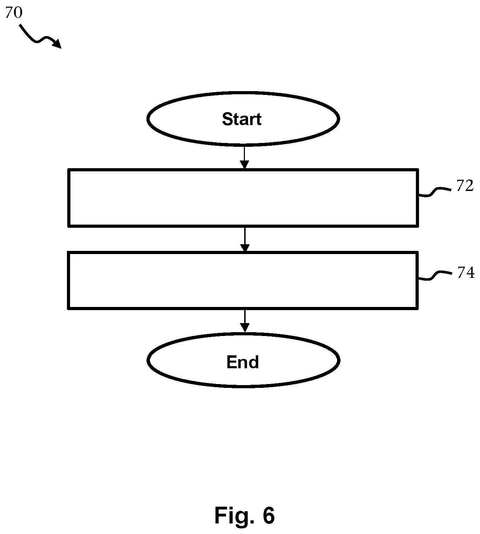

Figs. 6 to 9 show examples of processes 70, 80, 90, 100 for determining the total values of the owners. The determination step 52 may comprise at least one of the processes 70, 80, 90, 100.

In Fig. 6, a process 70 is shown for determining the total values of the owners. Preferably, the process 70 may be used in the determination step 52 to calculate the total value of each owner. In particular, the process 70 may be used in the determination step 52 to initially calculate the total values.

In a first step 72 of the process 70, a pseudo-owner is determined for each object. Preferably, step 72 may be performed by the pseudo-owner calculation unit 20. In particular, the pseudo-owner of each object may be determined by using the process 60 of Fig. 5.

In a further step 74 of the process 70, the total value of each owner is determined by summing up the pseudo-ownerships of the respective owner among the plurality of objects. Preferably, step 74 may be performed by the accounting unit 22. The determined total values of the owners may be stored in the storage table. In particular, immediately after the start or a reset of the cache or directory system 30, the data storage resource 32 may contain no objects and thus each owner is known to own no objects. In this case, step 74 may store the value zero for each owner in the storage table.

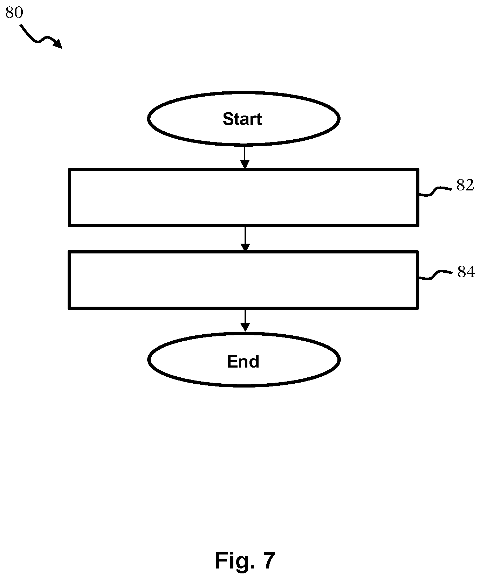

In Fig. 7, a process 80 is shown for determining the total values of the owners. In particular, the process 80 may be used in the determination step 52 to update the total values of the owners when a new object is added to the data storage resource 32. In particular, the process 80 may be performed when the operation unit 16 adds the new object to the data storage resource 32.

In a first step 82 of the process 80, a pseudo-owner is determined for the new object. Preferably, step 82 may be performed by the pseudo-owner calculation unit 20. In particular, the pseudo-owner of the new object may be determined by using the process 60 of Fig. 5.

In a further step 84 of the process 80, the total value of the owner who is the pseudo-owner of the new object is increased by one. Preferably, step 84 may be performed by the accounting unit 22. In particular, the old total value of the owner who is the pseudo-owner of the new object may be obtained from the storage table, and the obtained old total value may be increase by one to update the total value of the owner who is the pseudo-owner of the new object. Then, the updated total value of the owner who is the pseudo-owner of the new object may be stored in the storage table.

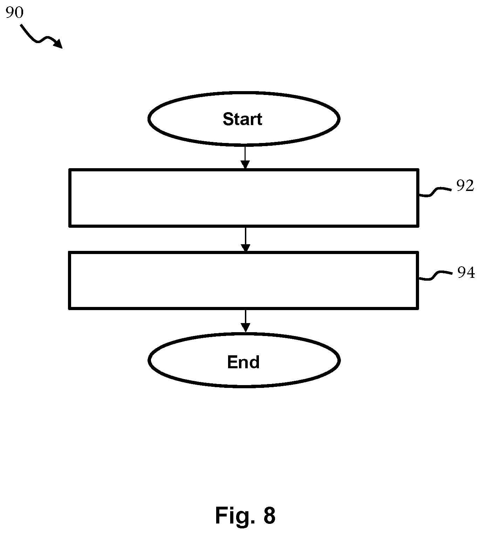

In Fig. 8, a process 90 is shown for determining the total values of the owners. In particular, the process 90 may be used in the determination step 52 to update the total values of the owners when an object is removed from the data storage resource 32. In particular, the process 90 may be performed when the operation unit 16 or the eviction unit 28 remove the object from the data storage resource 32.

In a first step 92 of the process 90, the old pseudo-owner of the removed object is determined. Preferably, step 92 may be performed by the pseudo-owner calculation unit 20. In particular, the pseudo-owner of the removed object may be determined by using the process 60 of Fig. 5.

In a further step 94 of the process 90, the total value of the owner who was the pseudo-owner of the removed object is reduced by one. Preferably, step 94 may be performed by the accounting unit 22. In particular, the old total value of the owner who was the pseudo-owner of the removed object may be obtained from the storage table, and the obtained old total value may be reduced by one to update the total value of the owner who was the pseudo-owner of the removed object. Then, the updated total value of the owner who was the pseudo-owner of the removed object may be stored in the storage table.

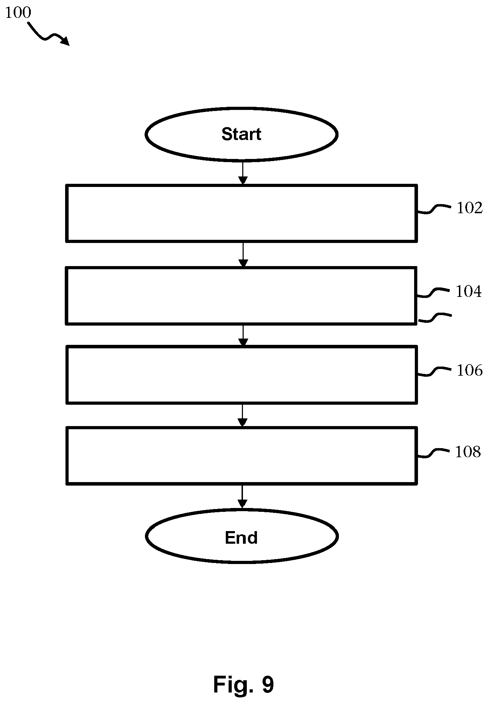

In Fig. 9, a process 100 is shown for determining the total values of the owners. In particular, the process 100 may be used in the determination step 52 to update the total values of the owners when the ownership of an object is changed in the data storage resource 32. In particular, the process 100 may be performed when the operation unit 16 changes the ownership of the object in the data storage resource 32.

In a first step 102 of the process 100, the old pseudo-owner of the object is determined, preferably based on the one or more owners who owned the object before the ownership was changed. Preferably, step 102 may be performed by the pseudo-owner calculation unit 20. In particular, the old pseudo-owner of the object may be determined by using the process 60 of Fig. 5.

In a further step 104 of the process 100, the total value of the owner who was the old pseudo-owner of the object before the ownership was changed is reduced by one. Preferably, step 104 may be performed by the accounting unit 22. In particular, the old total value of the owner who was the old pseudo-owner of the object may be obtained from the storage table, and the obtained total value may be reduced by one to update the total value of the owner who was the old pseudo-owner of the object. Then, the updated total value of the owner who was the pseudo-owner of the object may be stored in the storage table.

In a further step 106 of the process 100, a new pseudo-owner is determined for the object, preferably based on the one or more owners who own the object after the ownership was changed. Preferably, step 106 may be performed by the pseudo-owner calculation unit 20. In particular, the new pseudo-owner of the object may be determined by using the process 60 of Fig. 5.

In a further step 108 of the process 100, the total value of the owner who is the new pseudo-owner of the object is increased by one. Preferably, step 108 may be performed by the accounting unit 22. In particular, the old total value of the owner who is the new pseudo-owner of the object may be obtained from the storage table, and the obtained total value may be increased by one to update the total value of the owner who is the new pseudo-owner of the object. Then, the updated total value of the owner who is the new pseudo-owner of the object may be stored in the storage table.

In Fig. 10, a process 110 is shown for partitioning elements of a data storage resource based on total values of owners. The partition step 54 may comprise the process 110.

In a first step 112 of the process 110, for each owner of the plurality of owners, it is identified whether the owner has an excessive ownership of the resource, by comparing the total value of the owner to a preconfigured threshold. Preferably, the step 112 is performed by the excessive-owner identification unit 24. The preconfigured threshold may be the same for all owners. Alternatively, there may be a separate preconfigured threshold for each owner. The preconfigured threshold may be static or dynamic. Each preconfigured threshold may be stored in a storage table.

In a further step 114 of the process 110, for each owner with excessive ownership, one or more objects owned by the owner are identified as candidates for removal, in particular for eviction, from the data storage resource 32. Preferably, the step 114 is performed by the excessive-owner identification unit 26. Preferably, objects that are solely and/or partially owned by an excessive owner may be determined as the candidates for removal from the data storage resource 32.

In a further step 116 of the process 110, at least one of the objects is selected, in particular based on the determined total values of the owners. Preferably, the at least one of the objects may be selected by selecting at least one object among the candidates for removal.

In a further step 118 of the process 110, the at least one selected object is removed from the resource.

Preferably, the steps 116 and 118 are performed by the eviction unit 28 or the operation unit 16. In particular, the at least one of the objects may be selected and removed from the resource in case that most or all of the elements 34 of the data storage resource 32 store an object and/or in case that at least one new object is to be added to the data storage resource 32.

## Claims

1. A method (50) for partitioning elements (34) of a data storage resource (32) shared among a plurality of owners, wherein each element (34) is configured to store an object, wherein each object is owned by one or more owners of the plurality of owners, wherein the method comprises:
- a determination step (52) of determining, for each owner, a total value representing the owner's share of the resource, on a basis of the ownerships of each owner among the objects; and
- a partition step (54) of partitioning the elements (34) of the data storage resource (32) based on the determined total values of the owners.

2. The method (50) according to claim 1, wherein the plurality of owners is a plurality of processors (42) or a plurality of cores (44) of one or more processors (42).

3. The method (50) according to claim 1 or 2, wherein the data storage resource (32) is a cache or directory, in particular wherein each object corresponds to a cache or directory line entry and associates the line with the one or more owners which are currently caching the line.

4. The method (50) according to any of the claims 1 to 3, wherein the partition step (54) comprises:
- selecting (116) at least one of the objects, in particular based on the determined total values of the owners; and
- removing (118) the at least one selected object from the resource (32),
in particular wherein the at least one of the objects is selected and removed from the resource (32) in case that most or all of the elements (34) of the resource (32) store an object and/or in case that at least one new object is to be added to the resource (32).

5. The method (50) according to any of the claims 1 to **4,** wherein the partition step (54) comprises:
- identifying (112), for each owner, whether the owner has an excessive ownership of the resource, by comparing the total value of the owner to a preconfigured threshold, and
- identifying (114), for each owner with excessive ownership, one or more objects owned by the owner as candidates for removal, in particular for eviction, from the resource (32),
in particular wherein the at least one of the objects is selected by selecting at least one object among the candidates.

6. The method (50) according to any of claims 1 to 5, wherein, for each object, a pseudo-owner is determined from the one or more owners of the respective object, wherein the pseudo-owner has a pseudo-ownership of the respective object, wherein the total value of each owner is a sum of the pseudo-ownerships of the respective owner among the plurality of objects.

7. The method (50) according to claim 6, wherein the pseudo-owner of an object is determined based on the one or more owners that own the object.

8. The method (50) according to claim 7, wherein the pseudo-owner of an object is determined further based on an information associated with the respective object, in particular wherein the information is the memory address associated with each cache or directory line entry.

9. The method (50) according to claim 8, wherein the plurality of owners is ordered in a defined sequence, wherein the pseudo-owner of an object is determined by:
- determining (62) a specific sequence of the one or more owners of the object based on the defined sequence;
- calculating (64) a hash-ID by applying a hash function to the information associated with the object;
- calculating (66) a hash-position by taking the hash-ID modulo the number of owners of the object, in particular wherein the hash-position indicates a position in the specific sequence of the one or more owners of the object; and
- determining (68) the pseudo-owner of the object based on the hash-position and the specific sequence of the one or more owners of the object, in particular wherein the owner at the position in the specific sequence indicated by the hash-position is determined as the pseudo-owner of the object.

10. The method (50) according to any of the claims 7 to 9, wherein, when a new object is added to the resource (32), a pseudo-owner is determined for the new object, and the total value of the owner who is the pseudo-owner of the new object is increased by one.

11. The method (50) according to any of the claims 7 to 10, wherein, when an object is removed from the resource (32), the total value of the owner who was the pseudo-owner of the removed object is reduced by one.

12. The method (50) according to any of the claims 7 to 11, wherein, when the ownership of an object in the resource (32) is changed, the total value of the owner who was the pseudo-owner of the object before the ownership of the object changed is reduced by one, a new pseudo-owner is determined for the object, and the total value of the owner who is the new pseudo-owner of the object is increased by one.

13. An enhanced controller (10) for partitioning elements (34) of a data storage resource (32) shared among a plurality of owners, wherein each element (34) is configured to store an object, wherein each object is owned by one or more owners of the plurality of owners, wherein the enhanced controller comprises:
- a determination unit (12) that is configured to determine, for each owner, a total value representing the owner's share of the resource (32), on a basis of the ownerships of each owner among the objects; and
- a partition unit (14) that is configured to partition the elements (34) of the data storage (32) resource based on the determined total values of the owners.

14. A cache or directory system (30) comprising the enhanced controller (10) of claim 13 and the data storage resource (32).

15. A processing system (40) comprising:
- one or more cache or directory systems (30) according to claim 14; and
- a plurality of processors (42) or a plurality of cores (44) of one or more processors (44) as the plurality of owners.

## Patentansprüche

1. Verfahren (50) zum Partitionieren von Elementen (34) einer Datenspeicherressource (32), die von einer Mehrzahl von Inhabern gemeinsam genutzt wird, wobei jedes Element (34) eingerichtet ist, ein Objekt zu speichern, wobei jedes Objekt einem oder mehreren Inhabern der Mehrzahl von Inhabern gehört, wobei das Verfahren aufweist:
- einen Bestimmungsschritt (52) zum Bestimmen, für jeden Inhaber, eines Gesamtwerts, der den Anteil des Inhabers an der Ressource repräsentiert, auf der Grundlage der Inhaberschaften jedes Inhabers an den Objekten; und
- einen Partitionierungsschritt (54) zum Partitionieren der Elemente (34) der Datenspeicherressource (32) basierend auf den bestimmten Gesamtwerten der Inhaber.

2. Verfahren (50) nach Anspruch 1, wobei die Mehrzahl von Inhabern eine Mehrzahl von Prozessoren (42) oder eine Mehrzahl von Kernen (44) eines oder mehrerer Prozessoren (42) ist.

3. Verfahren (50) nach Anspruch 1 oder 2, wobei die Datenspeicherressource (32) ein Cache oder Verzeichnis ist, insbesondere wobei jedes Objekt einem Cache-oder Verzeichniszeileneintrag entspricht und die Zeile den einen oder mehreren Inhabern zuordnet, welche die Zeile derzeit im Cache zwischenspeichern.

4. Verfahren (50) nach einem der Ansprüche 1 bis 3, wobei der Partitionierungsschritt (54) aufweist:
- Auswählen (116) zumindest eines der Objekte, insbesondere basierend auf den bestimmten Gesamtwerten der Inhaber; und
- Entfernen (118) des zumindest einen ausgewählten Objekts aus der Ressource (32), insbesondere wobei das zumindest eine der Objekte ausgewählt und aus der Ressource (32) entfernt wird, falls die meisten oder alle der Elemente (34) der Ressource (32) ein Objekt speichern und/oder falls zumindest ein neues Objekt zu der Ressource (32) hinzugefügt werden soll.

5. Verfahren (50) nach einem der Ansprüche 1 bis 4, wobei der Partitionierungsschritt (54) aufweist:
- Identifizieren (112) für jeden Inhaber, ob der Inhaber eine exzessive Inhaberschaft an der Ressource hat, durch Vergleichen des Gesamtwerts des Inhabers mit einem vorkonfigurierten Schwellwert, und
- Identifizieren (114), für jeden Inhaber mit exzessiver Inhaberschaft, eines oder mehrerer Objekte, die dem Inhaber gehören, als Kandidaten zur Entfernung, insbesondere zur Räumung, aus der Ressource (32),
insbesondere wobei das zumindest eine der Objekte durch Auswählen zumindest eines Objekts unter den Kandidaten ausgewählt wird.

6. Verfahren (50) nach einem der Ansprüche 1 bis 5, wobei für jedes Objekt ein Pseudo-Inhaber aus den einen oder mehreren Inhabern des jeweiligen Objekts bestimmt wird, wobei der Pseudo-Inhaber eine Pseudo-Inhaberschaft an dem jeweiligen Objekt hat, wobei der Gesamtwert jedes Inhabers eine Summe der Pseudo-Inhaberschaften des jeweiligen Inhabers unter der Mehrzahl von Objekten ist.

7. Verfahren (50) nach Anspruch 6, wobei der Pseudo-Inhaber eines Objekts basierend auf den einen oder mehreren Inhabern bestimmt wird, denen das Objekt gehört.

8. Verfahren (50) nach Anspruch 7, wobei der Pseudo-Inhaber eines Objekts des Weiteren basierend auf einer dem jeweiligen Objekt zugeordneten Information bestimmt wird, insbesondere wobei die Information die Memory-Adresse ist, die jedem Cache- oder Verzeichniszeileneintrag zugeordnet ist.

9. Verfahren (50) nach Anspruch 8, wobei die Mehrzahl von Inhabern in einer definierten Sequenz geordnet ist, wobei der Pseudo-Inhaber eines Objekts bestimmt wird durch:
- Bestimmen (62) einer spezifischen Sequenz der einen oder mehreren Inhaber des Objekts basierend auf der definierten Sequenz;
- Berechnen (64) einer Hash-ID durch Anwenden einer Hash-Funktion auf die dem Objekt zugeordnete Information;
- Berechnen (66) einer Hash-Position durch Nehmen der Hash-ID Modulo der Anzahl von Inhabern des Objekts, insbesondere wobei die Hash-Position eine Position in der spezifischen Sequenz der einen oder mehreren Inhaber des Objekts anzeigt; und
- Bestimmen (68) des Pseudo-Inhabers des Objekts basierend auf der Hash-Position und der spezifischen Sequenz der einen oder mehreren Inhaber des Objekts, insbesondere wobei der Inhaber an der Position in der spezifischen Sequenz, die durch die Hash-Position angezeigt wird, als der Pseudo-Inhaber des Objekts bestimmt wird.

10. Verfahren (50) nach einem der Ansprüche 7 bis 9, wobei, wenn ein neues Objekt zu der Ressource (32) hinzugefügt wird, ein Pseudo-Inhaber für das neue Objekt bestimmt wird und der Gesamtwert des Inhabers, der der Pseudo-Inhaber des neuen Objekts ist, um eins erhöht wird.

11. Verfahren (50) nach einem der Ansprüche 7 bis 10, wobei, wenn ein Objekt aus der Ressource (32) entfernt wird, der Gesamtwert des Inhabers, der der Pseudo-Inhaber des entfernten Objekts war, um eins reduziert wird.

12. Verfahren (50) nach einem der Ansprüche 7 bis 11, wobei, wenn die Inhaberschaft eines Objekts in der Ressource (32) geändert wird, der Gesamtwert des Inhabers, der der Pseudo-Inhaber des Objekts war, bevor die Inhaberschaft des Objekts geändert wurde, um eins reduziert wird, ein neuer Pseudo-Inhaber für das Objekt bestimmt wird und der Gesamtwert des Inhabers, der der neue Pseudo-Inhaber des Objekts ist, um eins erhöht wird.

13. Erweiterte Steuereinheit (10) zum Partitionieren von Elementen (34) einer Datenspeicherressource (32), die von einer Mehrzahl von Inhabern gemeinsam genutzt wird, wobei jedes Element (34) eingerichtet ist, ein Objekt zu speichern, wobei jedes Objekt einem oder mehreren Inhabern der Mehrzahl von Inhabern gehört, wobei die erweiterte Steuereinheit aufweist:
- eine Bestimmungseinheit (12), die eingerichtet ist, für jeden Inhaber einen Gesamtwert, der den Anteil des Inhabers an der Ressource (32) repräsentiert, auf der Grundlage der Inhaberschaften jedes Inhabers an den Objekten zu bestimmen; und
- eine Partitionseinheit (14), die eingerichtet ist, die Elemente (34) der Datenspeicherressource (32) basierend auf den bestimmten Gesamtwerten der Inhaber zu partitionieren.

14. Cache- oder Verzeichnissystem (30), das die erweiterte Steuereinheit (10) nach Anspruch 13 und die Datenspeicherressource (32) aufweist.

15. Verarbeitungssystem (40), das aufweist:
- ein oder mehrere Cache- oder Verzeichnissysteme (30) nach Anspruch 14;
und
- eine Mehrzahl von Prozessoren (42) oder eine Mehrzahl von Kernen (44) eines oder mehrerer Prozessoren (44) als die Mehrzahl von Inhabern.

## Revendications

1. Procédé (50) pour partitionner des éléments (34) d'une ressource de stockage de données (32) partagée entre une pluralité de propriétaires, dans lequel chaque élément (34) est configuré pour stocker un objet, dans lequel chaque objet est détenu par un ou plusieurs propriétaires de la pluralité de propriétaires, dans lequel le procédé comprend :
- une étape de détermination (52) consistant à déterminer, pour chaque propriétaire, une valeur totale représentant la part du propriétaire de la ressource, sur la base des propriétés de chaque propriétaire parmi les objets ; et
- une étape de partitionnement (54) consistant à partitionner les éléments (34) de la ressource de stockage de données (32) sur la base des valeurs totales déterminées des propriétaires.

2. Procédé (50) selon la revendication 1, dans lequel la pluralité de propriétaires est une pluralité de processeurs (42) ou une pluralité de cœurs (44) d'un ou de plusieurs processeurs (42).

3. Procédé (50) selon la revendication 1 ou 2, dans lequel la ressource de stockage de données (32) est une mémoire cache ou un répertoire, en particulier dans lequel chaque objet correspond à une entrée de ligne de mémoire cache ou de répertoire et associe la ligne au ou aux plusieurs propriétaires qui mettent actuellement la ligne en mémoire cache.

4. Procédé (50) selon l'une des revendications 1 à 3, dans lequel l'étape de partitionnement (54) comprend :
- la sélection (116) d'au moins un des objets, en particulier sur la base des valeurs totales déterminées des propriétaires ; et
- la suppression (118) de l'au moins un objet sélectionné de la ressource (32),
en particulier dans lequel l'au moins un des objets est sélectionné et supprimé de la ressource (32) dans le cas où la plupart ou la totalité des éléments (34) de la ressource (32) stockent un objet et/ou dans le cas où au moins un nouvel objet doit être ajouté à la ressource (32).

5. Procédé (50) selon l'une des revendications 1 à 4, dans lequel l'étape de partitionnement (54) comprend :
- l'identification (112), pour chaque propriétaire, pour savoir si le propriétaire a une propriété excessive de la ressource, en comparant la valeur totale du propriétaire à un seuil préconfiguré, et
- l'identification (114), pour chaque propriétaire ayant une propriété excessive, d'un ou de plusieurs objets détenus par le propriétaire comme candidats à la suppression, en particulier à l'éviction, de la ressource (32),
en particulier dans lequel l'au moins un des objets est sélectionné en sélectionnant au moins un objet parmi les candidats.

6. Procédé (50) selon l'une des revendications 1 à 5, dans lequel, pour chaque objet, un pseudo-propriétaire est déterminé à partir du ou des plusieurs propriétaires de l'objet respectif, dans lequel le pseudo-propriétaire a une pseudo-propriété de l'objet respectif, dans lequel la valeur totale de chaque propriétaire est une somme des pseudo-propriétés du propriétaire respectif parmi la pluralité d'objets.

7. Procédé (50) selon la revendication 6, dans lequel le pseudo-propriétaire d'un objet est déterminé sur la base du ou des plusieurs propriétaires qui détiennent l'objet.

8. Procédé (50) selon la revendication 7, dans lequel le pseudo-propriétaire d'un objet est déterminé en outre sur la base d'informations associées à l'objet respectif, en particulier dans lequel les informations sont l'adresse mémoire associée à chaque entrée de ligne de mémoire cache ou de répertoire.

9. Procédé (50) selon la revendication 8, dans lequel la pluralité de propriétaires est ordonnée selon une séquence définie, dans lequel le pseudo-propriétaire d'un objet est déterminé en :
- déterminant (62) une séquence spécifique du ou des plusieurs propriétaires de l'objet sur la base de la séquence définie ;
- calculant (64) un ID de hachage en appliquant une fonction de hachage aux informations associées à l'objet ;
- calculant (66) une position de hachage en prenant l'ID de hachage modulo le nombre de propriétaires de l'objet, en particulier dans lequel la position de hachage indique une position dans la séquence spécifique du ou des plusieurs propriétaires de l'objet ; et
- déterminant (68) le pseudo-propriétaire de l'objet sur la base de la position de hachage et de la séquence spécifique du ou des plusieurs propriétaires de l'objet, en particulier dans lequel le propriétaire à la position dans la séquence spécifique indiquée par la position de hachage est déterminé comme étant le pseudo-propriétaire de l'objet.

10. Procédé (50) selon l'une des revendications 7 à 9, dans lequel, lorsqu'un nouvel objet est ajouté à la ressource (32), un pseudo-propriétaire est déterminé pour le nouvel objet, et la valeur totale du propriétaire qui est le pseudo-propriétaire du nouvel objet est augmentée d'une unité.

11. Procédé (50) selon l'une des revendications 7 à 10, dans lequel, lorsqu'un objet est supprimé de la ressource (32), la valeur totale du propriétaire qui était le pseudo-propriétaire de l'objet supprimé est réduite d'une unité.

12. Procédé (50) selon l'une des revendications 7 à 11, dans lequel, lorsque la propriété d'un objet dans la ressource (32) est modifiée, la valeur totale du propriétaire qui était le pseudo-propriétaire de l'objet avant que la propriété de l'objet ne change est réduite d'une unité, un nouveau pseudo-propriétaire est déterminé pour l'objet, et la valeur totale du propriétaire qui est le nouveau pseudo-propriétaire de l'objet est augmentée d'une unité.

13. Contrôleur amélioré (10) pour partitionner des éléments (34) d'une ressource de stockage de données (32) partagée entre une pluralité de propriétaires, dans lequel chaque élément (34) est configuré pour stocker un objet, dans lequel chaque objet est détenu par un ou plusieurs propriétaires de la pluralité de propriétaires, dans lequel le contrôleur amélioré comprend :
- une unité de détermination (12) qui est configurée pour déterminer, pour chaque propriétaire, une valeur totale représentant la part du propriétaire de la ressource (32), sur la base des propriétés de chaque propriétaire parmi les objets ; et
- une unité de partitionnement (14) qui est configurée pour partitionner les éléments (34) de la ressource de stockage de données (32) sur la base des valeurs totales déterminées des propriétaires.

14. Système de mémoire cache ou de répertoire (30) comprenant le contrôleur amélioré (10) de la revendication 13 et la ressource de stockage de données (32).

15. Système de traitement (40) comprenant :
- un ou plusieurs systèmes de mémoire cache ou de répertoire (30) selon la revendication 14 ; et
- une pluralité de processeurs (42) ou une pluralité de cœurs (44) d'un ou de plusieurs processeurs (44) comme étant la pluralité de propriétaires.
